# EUROPEAN PATENT APPLICATION

(11) **EP 4 814 692 A1**
(43) Date of publication of application: **30.09.2026**
(21) Application number: 26164860.4
(22) Date of filing: 16.03.2026
(51) Int. Cl.: G06F 7/544, G06F 7/483

(54) **DYNAMICALLY MIXED PRECISION MACHINE LEARNING SYSTEMS AND METHODS**

(30) Priority: 28.03.2025 US 202519094251
(71) Applicant: Altera Corporation, San Jose, CA 95134 (US)
(72) Inventor: KERTESZ, Audrey, Calgary, AB T2Y 3K7 (CA); ZHANG, Tianyi, North York, ON M3H 6A9 (CA); IBRAHIM, Mohamed, Nepean, ON K2E 6Z7 (CA); VANDERHOEK, Tim, East York, ON M4H 6A9 (CA); MCLEAN, Peter, Brampton, ON L6W 1J1 (CA)
(74) Representative: Hermann, Felix

(57) **Abstract**

Systems, methods, and circuitry for dynamically mixed precision machine learning are provided. An integrated circuit may include conversion circuitry to convert input feature data to block floating point format and upper/lower splitter circuitry to split the input feature data in the block floating point format into an upper component in the block floating point format and a lower component in the block floating point format. A processing element may use only the upper component when operating in a lower-precision mode and use both the upper component and the lower component when operating in a higher-precision mode.

## Description

### BACKGROUND

This disclosure relates to systems and methods to support mixed precision at different machine learning layers of machine learning processing on an integrated circuit device, such as a field programmable gate array (FPGA).

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Integrated circuits are found in numerous electronic devices and provide a variety of functionality. Many integrated circuits include programmable logic circuitry that may be configured with a hardware system design to implement hardware designs that may perform a wide variety of different functions. In addition to programmable logic circuitry, many integrated circuits also include hardened circuits to perform special-purpose operations, such as digital signal processing (DSP) blocks with hardened arithmetic circuitry.

An integrated circuit may be designed or, in the case of an FPGA, may be configured, to perform machine learning. Certain machine learning graphs specify that critical layers be executed with a certain high-precision inference. This may be the case with primary inputs that have both large and small variation, and the machine learning graph may respond to both. In other words, while operating at a lower precision may be efficient, this may not work for some machine learning graphs. Yet executing all layers at high precision may be prohibitively expensive (in terms of area or throughput).

### BRIEF DESCRIPTION OF THE DRAWINGS

Various aspects of this disclosure may be better understood upon reading the following detailed description and upon reference to the drawings in which:
FIG. 1 is a block diagram of a system used to program a system design onto an integrated circuit device;
FIG. 2 is a block diagram of an example integrated circuit device that may be programmed with a system design;
FIG. 3 is a block diagram of an N-layer machine learning graph with layers of varying precision;
FIG. 4 is a block diagram of calculations that may take place for a layer of a machine learning graph;
FIG. 5 is a block diagram of one example of a processing element (PE) to perform machine learning calculations using multipliers and adders of a hardened digital signal processing (DSP) block;
FIG. 6 is a block diagram of another example of a processing element (PE) to perform machine learning calculations using tensor circuitry of a hardened digital signal processing (DSP) block;
FIG. 7 is a flowchart of a method for operating a dynamically mixed precision machine learning system;
FIG. 8 is a block diagram of a dynamically mixed precision machine learning system operable at two different precisions;
FIG. 9 is another view of the block diagram of the dynamically mixed precision machine learning system operable at two different precisions of FIG. 8;
FIG. 10 is a block diagram of a dynamically mixed precision machine learning system operable at four different precisions;
FIG. 11 is a data structure diagram illustrating a conversion of floating point values into lower-precision block floating point values for efficient processing;
FIG. 12 is a data structure diagram illustrating a conversion of floating point values into higher-precision groupings of two lower-precision block floating point values based on an INT9 integer format for efficient processing;
FIG. 13 is a block diagram of a stream buffer to hold one set of lower-precision block floating point values in a lower-precision mode and multiple sets of lower-precision block floating point values that collectively have a higher precision in a higher-precision mode;
FIG. 14 is a block diagram of control logic circuitry to control the dynamically mixed precision machine learning system of FIG. 8;
FIG. 15 is a block diagram illustrating timing of multiply-add operations using the dynamically mixed precision machine learning system over four clock cycles; and
FIG. 16 is a block diagram of a data processing system that may incorporate the systems and methods of this disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. Furthermore, the phrase A "based on" B is intended to mean that A is at least partially based on B. Moreover, the term "or" is intended to be inclusive (e.g., logical OR) and not exclusive (e.g., logical XOR). In other words, the phrase A "or" B is intended to mean A, B, or both A and B.

This disclosure relates to an integrated circuit that is designed for or configurable to perform dynamically mixed-precision machine learning. Indeed, certain machine learning graphs specify that critical layers be executed with a certain high-precision inference. The integrated circuit of this disclosure may operate using single values of a lower, native precision for certain layers but may operate at a higher precision using multiple sets of values at the lower, native precision at other layers. This may preserve precision for critical layers while operating efficiently at lower precisions at other layers.

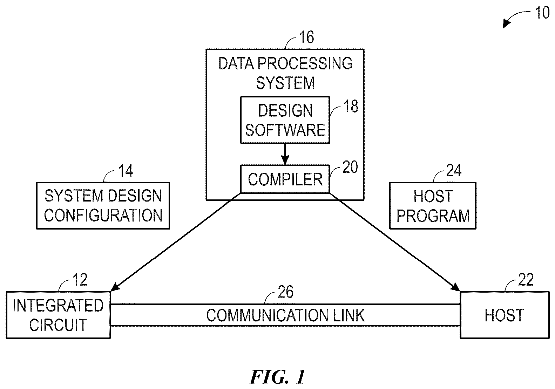

FIG. 1 illustrates a block diagram of a system 10 that may be used to program an integrated circuit device 12, such as an FPGA (e.g., Agilex^{™}, Stratix^{®}, Arria^{®}, MAX^{®}, or Cyclone^{®} devices by Altera^{®} Corporation), with a system design using a system design configuration 14. Note that, while this disclosure largely refers to the integrated circuit device 12 as being a programmable logic device, such as an FPGA, in some embodiments, the integrated circuit device 12 may also be a one-time programmable device or structured application specific integrated circuit (ASIC), such as an Intel^{®} eASIC^{™} device by Intel^{®} Corporation. In other examples, the integrated circuit device 12 may be any suitable integrated circuit that is manufactured to have a particular system design with circuitry to perform desired data processing operations. The integrated circuit device 12 may be a single monolithic integrated circuit or a multi-die system of integrated circuits. The integrated circuit device 12 may include a single integrated circuit, multiple integrated circuits in a package, or multiple integrated circuits in multiple packages communicating remotely (e.g., via wires or traces) and may be referred to as an integrated circuit device or an integrated circuit system whether formed from a single integrated circuit or multiple integrated circuits in a package.

A designer may desire to implement the system design 14 (sometimes referred to as a circuit design or configuration) to perform a wide variety of possible operations on the integrated circuit device 12. In some cases, the designer may specify a high-level program to be implemented, such as an OPENCL^{®} program that may enable the designer to more efficiently and easily provide programming instructions to configure a set of programmable logic cells for the integrated circuit device 12 without specific knowledge of low-level hardware description languages (e.g., Verilog, very high-speed integrated circuit hardware description language (VHDL)). For example, since OPENCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12.

In a configuration mode of the integrated circuit device 12, a designer may use a data processing system 16 (e.g., a computer including a data processing system having a processor and memory or storage) to implement high-level designs (e.g., a system user design) using design software 18 (e.g., executable instructions stored in a tangible, non-transitory, computer-readable medium such as the memory or storage of the data processing system 16), such as a version of Altera^{®} Quartus^{®} by Altera Corporation. The data processing system 16 may use the design software 18 and a compiler 20 to convert the high-level program into a lower-level description (e.g., a configuration program, a bitstream) as the system design configuration 14. The compiler 20 may provide machine-readable instructions representative of the high-level program to a host 22 and the system design configuration 14 to the integrated circuit device 12.

Additionally or alternatively, the host 22 running the host program 24 may control or implement the system design configuration 14 onto the integrated circuit device 12. For example, the host 22 may communicate instructions from the host program 24 to the integrated circuit device 12 via a communications link 26 that may include, for example, direct memory access (DMA) communications or peripheral component interconnect express (PCIe) communications. The designer may use the design software 18 to generate and/or to specify a low-level program, using low-level tools such as the low-level hardware description languages described above. Further, in some embodiments, the system 10 may be implemented without a separate host 22 or host program 24. Thus, embodiments described herein are intended to be illustrative and not limiting.

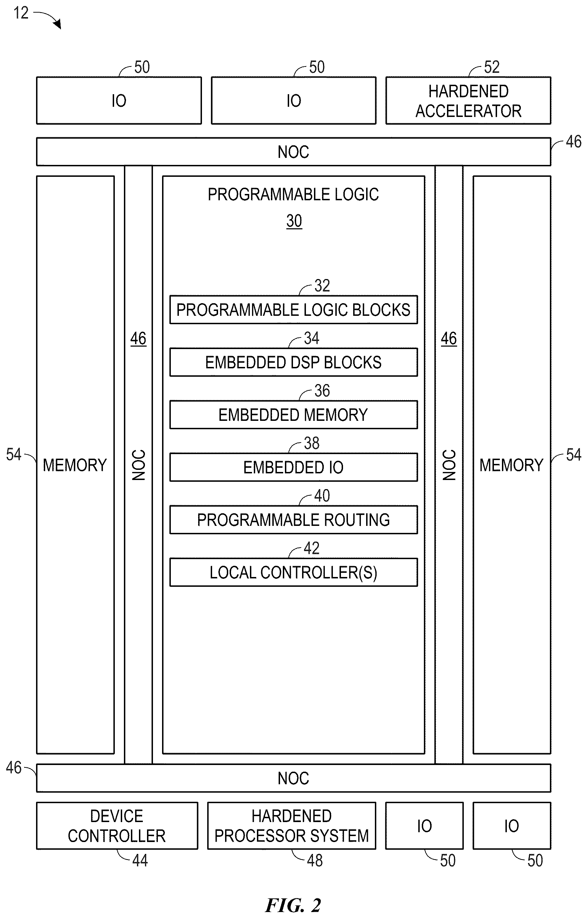

The integrated circuit device 12 may take any suitable form that may implement the system design configuration 14. In one example shown in FIG. 2, the integrated circuit device 12 may include programmable logic circuitry 30, which include a two-dimensional array of many different functional blocks, such as programmable logic blocks 32, embedded digital signal processing (DSP) blocks 34, embedded memory blocks 36, and embedded input-output blocks 38. In many cases, there may be rows or columns of these functional blocks that may be programmably connected to one another using programmable routing 40.

The programmable logic blocks 32 may be programmed to implement a wide variety of logic circuitry. The programmable logic blocks 32 may include a number of adaptive logic modules (ALMs), which may take the form of lookup tables (LUTs) that can be programmed to implement a logic truth table, effectively enabling any the programmable logic blocks 32 to implement any desired logic circuitry when configured with the system design configuration 14. The programmable logic blocks 32 and are sometimes referred to as logic array blocks (LABs) or configurable logic blocks (CLBs).

The embedded DSP blocks 34, embedded memory blocks 36, and embedded IO blocks 38 may be distributed around the programmable logic blocks 32. For example, there may be several columns of programmable logic blocks 32 for every column of DSP blocks 34, column of embedded memory blocks 36, or column of embedded IO blocks 38. The embedded DSP blocks 34 may include "hardened" circuits that are specialized to efficiently perform certain arithmetic operations. This is in contrast to "soft logic" circuits that may be programmed into the programmable logic blocks 32 to perform the same functions, but which may not be as efficient as the hardened circuits of the DSP blocks 34. The embedded memory blocks 36 may include dedicated local memory (e.g., blocks of 20kB, blocks of 1MB). The embedded IO blocks 38 may allow for inter-die or inter-package communication. The embedded DSP blocks 34, embedded memory blocks 36, and embedded IO blocks 38 may be accessible to the programmable logic blocks 32 using the programmable routing 40.

The various functional blocks of the programmable logic circuitry 30 may be grouped into programmable regions, sometimes referred to as logic sectors, that may be individually managed and configured by corresponding local controllers 42 (e.g., sometimes referred to as Local Sector Managers (LSMs)). The grouping of the programmable logic circuitry 30 resources on the integrated circuit device 12 into logic sectors, logic array blocks, logic elements, or adaptive logic modules is merely illustrative. In general, the integrated circuit device 12 may include functional logic blocks of any suitable size and type, which may be organized in accordance with any suitable logic resource hierarchy. Indeed, there may be other functional blocks (e.g., other embedded application specific integrated circuit (ASIC) blocks) than those shown in FIG. 2.

Before continuing, it may be noted that the programmable logic circuitry 30 of the integrated circuit device 12 may be controlled by programmable memory elements sometimes referred to as configuration random access memory (CRAM). Memory elements may be loaded with configuration data (also called programming data or a configuration bitstream) that represents the system design configuration 14. Once loaded, the memory elements may provide a corresponding static control signal that controls the operation of an associated functional block. In one scenario, the outputs of the loaded memory elements are applied to the gates of metal-oxide-semiconductor transistors in a functional block to turn certain transistors on or off and thereby configure the logic in the functional block including the routing paths. Programmable logic circuit elements that may be controlled in this way include parts of multiplexers (e.g., multiplexers used for forming routing paths in interconnect circuits), lookup tables, logic arrays, AND, OR, NAND, and NOR logic gates, pass gates, and the like. The configuration memory elements may use any suitable volatile and/or non-volatile memory structures such as random-access-memory (RAM) cells, fuses, antifuses, programmable read-only-memory (ROM) memory cells, mask-programmed, laser-programmed structures, or combinations of structures such as these.

A device controller 44, sometimes referred to as a secure device manager (SDM), may manage the operation of the integrated circuit device 12. The device controller 44 may include any suitable logic circuitry to control and/or program the programmable logic circuitry 30 or other elements of the integrated circuit device 12. For example, the device controller 44 may include a processor (e.g., an x86 processor or a reduced instruction set computer (RISC) processor, such as an Advanced RISC Machine (ARM) processor or a RISC-V processor) that executes instructions stored on any suitable tangible, non-transitory, machine-readable media (e.g., memory or storage). Additionally or alternatively, the device controller 44 may include a hardware finite state machine (FSM). The device controller 44 may provide other functions, such as serving as a platform for virtual machines that may manage the operation of the integrated circuit device 12.

A network-on-chip (NOC) 46 may connect the various elements of the integrated circuit device 12. The NOC 46 may provide rapid, packetized communication to and from the programmable logic circuitry 30 and other blocks, such as a hardened processor system 48, high-speed input-output (IO) blocks 50, a hardened accelerator 52, and local device memory 54. The integrated circuit device 12 may include the hardened processor system 48 when the integrated circuit device 12 takes the form of a system-on-chip (SOC). The hardened processor system 48 may include a hardened processor (e.g., an x86 processor or a reduced instruction set computer (RISC) processor, such as an Advanced RISC Machine (ARM) processor or a RISC-V processor) that may act as a host machine on the integrated circuit device 12. The high-speed IO blocks 50 may enable communication using any suitable communication protocol(s) with other devices outside of the integrated circuit device 12, such as a separate memory device. The hardened accelerator 52 may include any hardened application-specific integrated circuitry (ASIC) logic to perform a desired acceleration function. For example, the hardened accelerator 52 may include hardened circuitry to perform cryptographic or media encoding or decoding. The memory 54 may provide local device memory (e.g., cache) that may be readily accessible by the programmable logic circuitry 30.

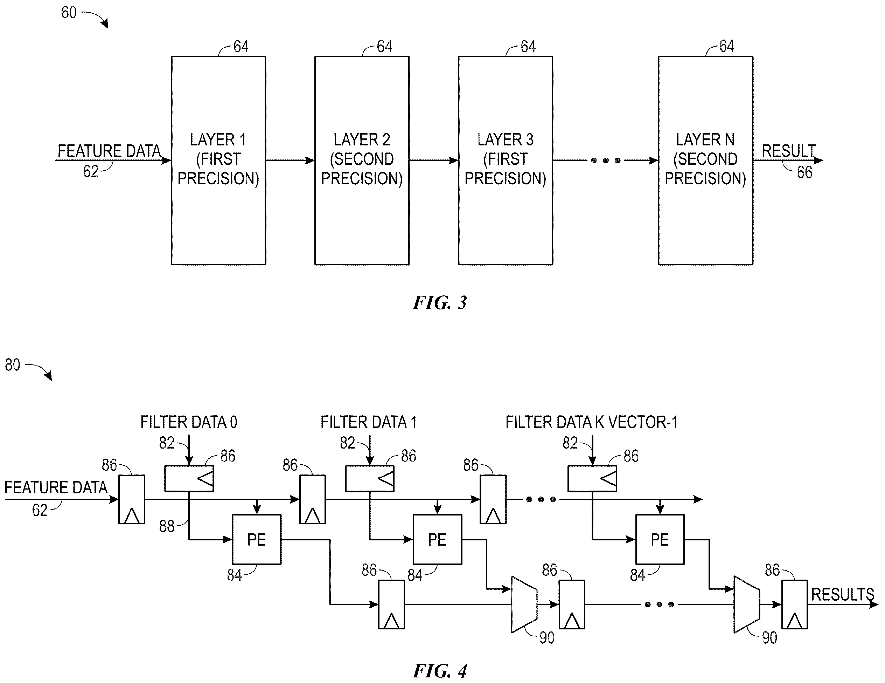

The integrated circuit device 12 may be used to implement a machine learning graph with layers of different precisions. For example, as shown in FIG. 3, the integrated circuit device 12 may implement a machine learning graph 60 (e.g., a neural network, such as a convolutional neural network or deep neural network). The machine learning graph 60 may process input feature data 62 through multiple layers 64 that have different respective filter data (not shown in FIG. 3). Feature data 62 may represent any suitable input data that is being processed for inference or training. For example, the feature data 62 may represent input image data in the case of image recognition, audio data in the case of audio recognition, network communication data in the case of communications optimization, and so forth. In the example of FIG. 3, there are N layers, where N is any suitable positive integer.

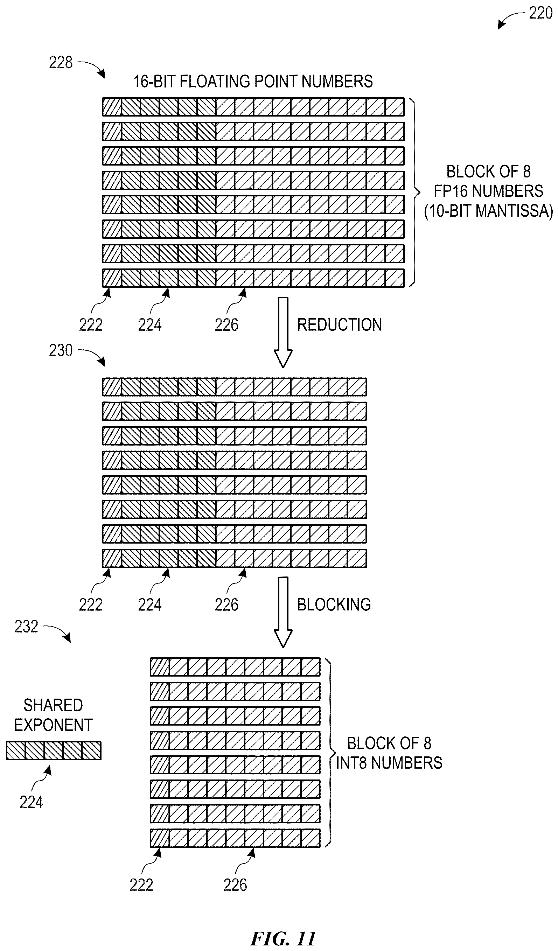

Different layers 64 may operate at different precisions but may use the same machine learning architecture. In the example of FIG. 3, a first layer 64 and a third layer 64 operate at a first precision and a second layer 64 and an Nth layer 64 operate at a second precision. By way of example, the first precision may be a block floating point number based on a single set of values at a native precision of the integrated circuit device 12. For instance, if hardened circuits (e.g., DSP blocks 34) of the integrated circuit device 12 use an integer format of INT8, the first precision may be a single set of 12-bit block floating point, which is based on INT8. If hardened circuits (e.g., DSP blocks 34) of the integrated circuit device 12 use an integer format of INT9, the first precision may be a single set of 13-bit block floating point, which is based on INT9. Continuing with this example, the second precision may be a block floating point number based on two sets of values at the native precision of the integrated circuit device 12 (e.g., double the precision of the first precision). For instance, if hardened circuits (e.g., DSP blocks 34) of the integrated circuit device 12 use an integer format of INT8, the second precision may be two sets of 12-bit block floating point values. If hardened circuits (e.g., DSP blocks 34) of the integrated circuit device 12 use an integer format of INT9, the second precision may be two sets of 13-bit block floating point values. Examples of these block floating point values will be discussed further with reference to FIGS. 11-13 below.

As shown in FIG. 4, the layers 64 may be computed based on a systolic array 80. Feature data 62 may be multiplied with filter data 82 in processing elements (PEs) 84 to produce an output. These computations may be pipelined using registers 86. The output of the PEs 84 exit to a drain pipeline 88 for storage or further processing (e.g., in a subsequent layer), selectable using multiplexers 90. The systolic array 80 provides multiple forms of structural parallelism. In one example, the filter data 82 may be a vector of a single lower-precision value or multiple lower-precision values in the native format of the integrated circuit device 12 for multiplication with the feature data 62 in a single dot product or multiple dot products over several clock cycles. In another example, the filter data 82 may be a vector a total of K_VECTOR values formed from multiple values from 1 to K_VECTOR, where K_VECTOR is a positive integer to obtain simultaneous dot products with a systolic shared input. Certain PE 84 architectures, such as tensor architectures, may also allow for temporally interleaved dot products through a tensor-mode side-feed involving a shared input.

The systolic array 80 may cache feature data 62 and filter data 82 in on-chip memory, such as the embedded memory blocks 36 or local device memory 54. Since on-chip memory is a scarce resource, data may be stored in the architecture precision known as block floating point (BFP). The BFP block size may be referred to as C_VECTOR and may vary depending on the native precision of the integrated circuit device 12. By way of example, the native precision of the hardened circuits (e.g., DSP blocks 34) of the integrated circuit device 12 use an integer format of INT8 or INT9. If the native precision is INT8, the BFP block size may be 12 bits. If the native precision is INT9, the BFP block size may be 13 bits. Note that the native precisions and corresponding BFP block sizes are provided by way of example; different integrated circuit devices 12 may have different native precisions than INT8 or INT9 and correspondingly may use different BFP block sizes.

The filter data 82 may be determined before runtime in the design software 18 or the compiler 20 in generating the system design configuration 14. By contrast, the feature data 62 is provided at runtime (e.g., in real time during inference). By way of example, the feature data 62 may be presented in a floating point format such as FP16. The feature data 62 may be converted to a block floating point format before processing in a PE 84.

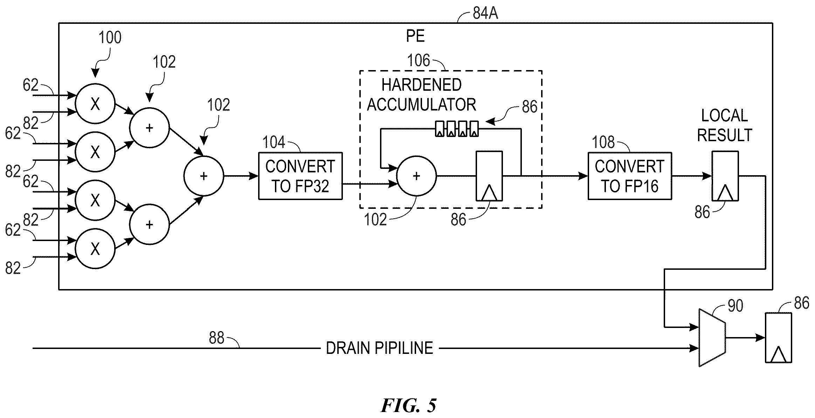

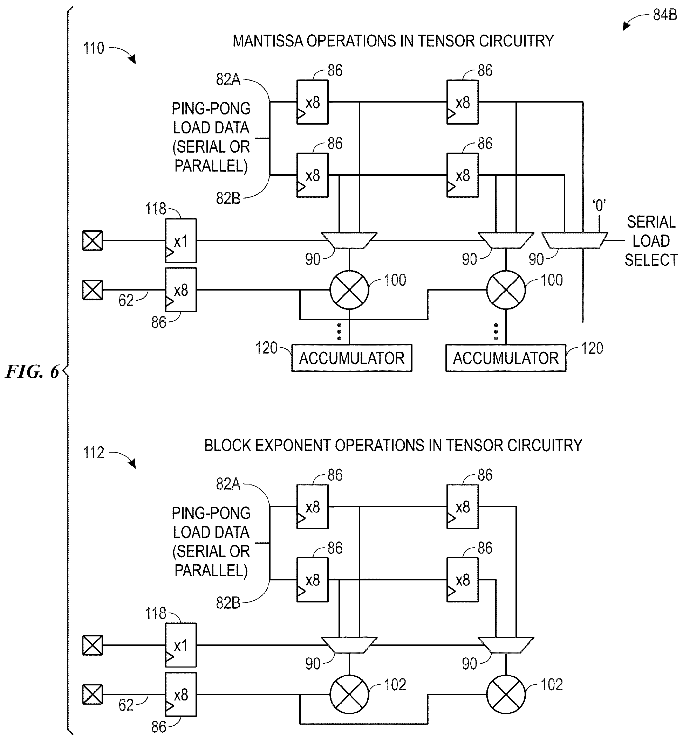

The PEs 84 may have any suitable architecture. Two examples are shown in FIGS. 5 and 6. In FIG. 5, a first PE 84A may include a number of multipliers 100 and addition circuitry 102. The multipliers 100 may operate on data of a particular precision. For example, the multipliers 100 may be hardened multipliers with an 8x8 or 9x9 native precision. The PE 84A includes four multipliers 100 that may operate on different (or the same) values of feature data 62 and filter data 84 in parallel. The resulting value may enter floating point 32 (FP32) conversion circuitry 104 that may convert the integer results to floating point before entering a hardened accumulator 106. The hardened accumulator 106 is shown to be formed from an adder 102 in a loop with registers 86. The hardened accumulator 106 may accumulate any suitable number of computations of feature data 62 and filter data 84 through the multipliers 100 and addition circuitry 102. For efficiency, the PE 84A may also include floating point 16 (FP16) conversion circuitry 108 to convert the ultimate local result from the PE 84 into a lower-precision value that can be output into the drain pipeline 88 via a multiplexer 90.

FIG. 6 illustrates another example of a PE 84B in the form of tensor circuitry. The PE 84B may use some of its resources to perform mantissa operations 110 and some of its resources to perform block exponent operations 112. With respect to the mantissa operations 110, the PE 84B may use a ping-pong loading scheme to load an upper mantissa component of filter data 82A and a lower mantissa component of filter data 82B in serial or in parallel. The upper mantissa component of filter data 82A and lower mantissa component of filter data 82B may be multiplied by the same upper or lower mantissa component of feature data 62 using parallel sets of multipliers 100, based on a selection using multiplexers 90A and 90B by a control signal pipelined through a register 118. Various registers 86 may pipeline the upper mantissa component of filter data 82A and lower mantissa component of filter data 82B and/or the upper or lower mantissa component of feature data 62. There may be multiple parallel sets of multipliers 100. In one example, the circuitry shown in FIG. 6 may be replicated ten times or there may be ten multipliers 100 that receive the output of one of the multiplexers 90 in parallel. The results from the set of multipliers 100 may be accumulated independently in the hardened accumulators 110.

With respect to the block exponent operations 112, the PE 84B may also use a ping-pong loading scheme to load an upper exponent component of filter data 82A and a lower exponent component of filter data 82B in serial or in parallel. The upper exponent component of filter data 82A and lower exponent component of filter data 82B may be added to the upper or lower exponent component of feature data 62 that corresponds to the upper or lower mantissa component of feature data 62 that is multiplied in the mantissa operations 110. This may be done using a parallel set of addition circuitry 102, based on a selection using multiplexers 90A and 90B by a control signal pipelined through a register 118. Various registers 86 may pipeline the upper exponent component of filter data 82A and lower exponent component of filter data 82B and the upper or lower exponent component of feature data 62. The results from the set of addition circuitry 102 may be used to shift the results of the mantissa operations 110 to achieve proper alignment.

Note that the architectures described with reference to FIGS. 4-6 may employ depthwise convolution to reduce the number of operations to compute a convolution. This may be achieved by expressing a convolution as a composition of two partial operations: a "depthwise" convolution, in which each input channel is independently convolved with a different kernel; and a "pointwise" convolution, which applies a 1x1 kernel across the output channels produced by the depthwise convolution. A regular convolution involves *HWC* × *K_{W}K_{H}F* operations. A depthwise + pointwise convolution involves only *HWC* × (*K_{W}K_{H}* + F) operations.

Here, H and *W* are the channel dimensions. (The input and output channel dimensions are assumed to be equal for ease of explanation to simplify the expressions.) *K_{W}* and *K_{H}* are the kernel dimensions. C is the number of input channels. F is the number of output channels (or equivalently, the number of filters). Depthwise convolutions may be computed by a separate auxiliary kernel programmed into the programmable logic circuitry 30. This is done because the systolic array 80 exploits input channel parallelism, which depthwise convolution lacks. Pointwise convolutions may be computed by the systolic array 80. In most cases, the kernel size is small, so the number of pointwise operations (*F*) may be much greater than the number of depthwise operations (*K_{W}K_{H}*). The depthwise auxiliary kernel may operate at a precision that supports a highest precision supported by the dynamically mixed precision systems and methods of this disclosure. In one example, this may be FP16.

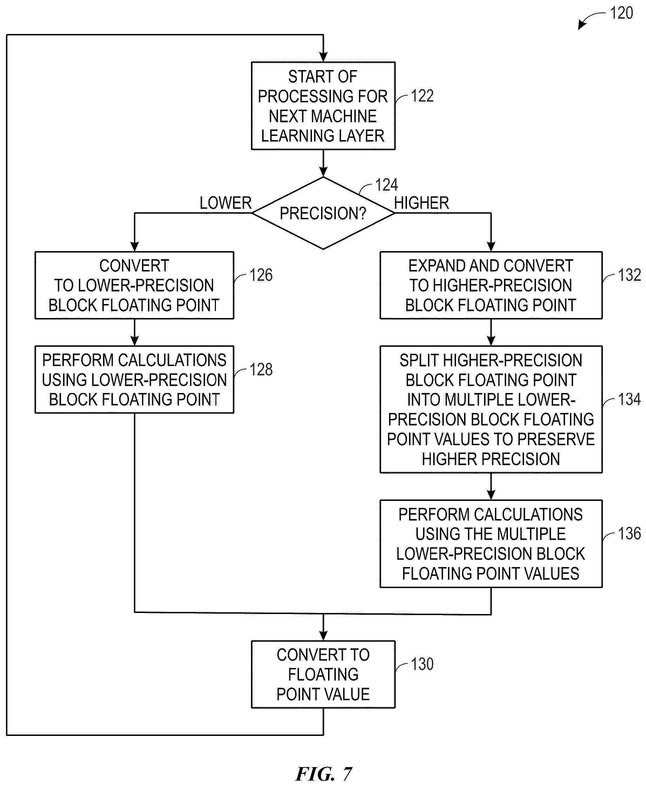

A flowchart 120 shown in FIG. 7 illustrates a manner of performing dynamically mixed precision machine learning for a machine learning graph, such as the machine learning graph 60 shown in FIG. 3. At the start of processing of each next machine learning layer (process block 122), a register may be set to indicate the precision of that layer. In the example of FIG. 7, there are two possible precisions: lower or higher. However, it should be understood that this is meant to be representative of one example and not exhaustive. In other embodiments, there may be multiple levels of precision.

If the precision is lower (decision block 124), the computations for that layer may take place using a block floating point format based on the native precision of the integrated circuit device 12. For instance, the incoming feature data from the previous layer may be converted from a floating point format (e.g., FP16 or FP32) to a lower-precision block floating point format based on the native precision (process block 126). The calculations for that layer may be performed using the values in the lower-precision block floating point format (process block 128). The results may be converted back to a floating point format (e.g., FP16 or FP32) (process block 130) and the process may progress to the next machine learning layer (process block 122).

If the precision is higher (decision block 124), the computations for that layer may take place using multiple sets of values in a block floating point format based on the native precision of the integrated circuit device 12 to preserve additional precision. For instance, the incoming feature data from the previous layer may be converted from a floating point format (e.g., FP16 or FP32) to a higher-precision block floating point format (process block 132). The values in the higher-precision block floating point format may be split into multiple components of the lower-precision block floating point values (process block 134) to preserve the higher precision conversion of process block 132. The calculations for that layer may be performed using the multiple sets of values in the lower-precision block floating point format (process block 128). The results may be converted back to a floating point format (e.g., FP16 or FP32) (process block 130) and the process may progress to the next machine learning layer (process block 122).

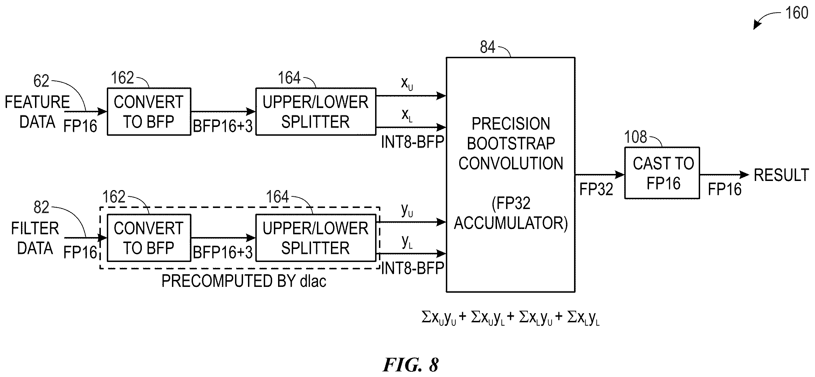

FIG. 8 illustrates a two-precision dynamically mixed precision machine learning architecture 160 that can dynamically support a lower or higher precision per layer in the manner discussed above with reference to the flowchart 120 of FIG. 7. The architecture 160 may include block floating point conversion components 162 that may convert sets of incoming feature data 62 or filter data 82 received in floating point (e.g., FP16) format into values in block floating point (BFP) format based on the native format of the integrated circuit device 12. Thus, for example, the BFP values may be based on INT8 or INT9. Examples will be described further below with reference to FIGS. 11-13. An upper/lower splitter component 164 may split the BFP values into sets of upper (higher significance) and lower (lower significance) components (e.g., individually based on the native format of the integrated circuit device 12, such as INT8 or INT9). For the feature data 62, the upper and lower components are referred to as X_{U} and X_{L}, respectively. For the filter data 82, the upper and lower components are referred to as Y_{U} and Y_{L}, respectively. Note that, since the filter data 82 may be known before runtime, it may be precomputed by the design software 18 or the compiler 20 and stored in memory (e.g., the memory 54 or off-chip memory). The components of the feature data 62 and the filter data 82 may be multiplied and accumulated in a PE 84. In one example, the accumulated value may be equal to: $\sum {x}_{U} {y}_{U} + \sum {x}_{U} {y}_{L} + \sum {x}_{L} {y}_{U} + \sum {x}_{L} {y}_{L}$

In some embodiments, this may result in an output having a higher-precision format of FP32, which may be converted to a lower-precision format, such as FP16, in FP16 conversion circuitry 108. The resulting value in FP16 format may be used as feature data 62 in a subsequent machine learning layer.

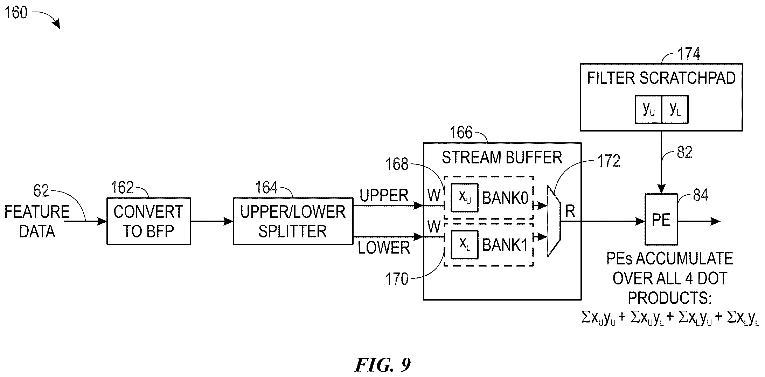

FIG. 9 is another visualization of the two-precision dynamically mixed precision machine learning architecture 160. Here, the block floating point conversion component 162 and the upper/lower splitter component 164 may be formed in circuitry to operate on the feature data 62 during runtime. For example, these components may be formed as soft logic circuits in the programmable logic circuitry 30 or designed as hardened circuits of the integrated circuit device 12. In FIG. 9, it is shown that the upper component (X_{U}) and lower component (X_{L}) may enter a stream buffer 166 in memory (e.g., the embedded memory blocks 36, the memory 54, or off-chip memory). The stream buffer 166 may include as many memory banks as there are split components; here, because there are two components, there are a first bank 168 (Bank0) and a second bank 170 (Bank1).

Depending on the operation of the PE 84, the first bank 168 or the second bank 170 may be selectively read (e.g., as illustrated by a multiplexer 172) into the PE 84. In one example, the first bank 168 and the second bank 170 have alternating memory addresses. For example, the first bank 168 may be populated by writing to a next memory address with an even least significant bit (LSB = 0). The second bank 170 may be populated by writing to a next memory address with an odd least significant bit (LSB = 1). Likewise, the first bank 168 may be selected by reading from the most recent even memory address and the second bank 170 may be selected by reading from the most recent odd memory address. Meanwhile, a filter scratchpad 174 may store the upper and lower components of the filter data 82, Y_{U} and Y_{L}, respectively. The filter scratchpad 174 may be populated before runtime. The filter scratchpad 174 may be formed in any suitable memory (e.g., the embedded memory blocks 36, the memory 54, or off-chip memory). By selectively reading the different components (X_{U} and X_{L}) of the filter data 62 and the different components (Y_{U} and Y_{L}) of the filter data 82, the PE 84 may accumulate four dot products according to Expression 1 above.

When operating in a lower-precision mode for a particular machine learning layer, the architecture 160 may simply populate just the upper component bank 168 of the stream buffer 166. Thus, the architecture 160 may support both higher-precision (e.g., upper and lower BFP components) and lower-precision (e.g., only the upper BFP components) with the same circuitry. In other words, the same architecture 160 may be used for different layers even when the different layers operate using different precisions.

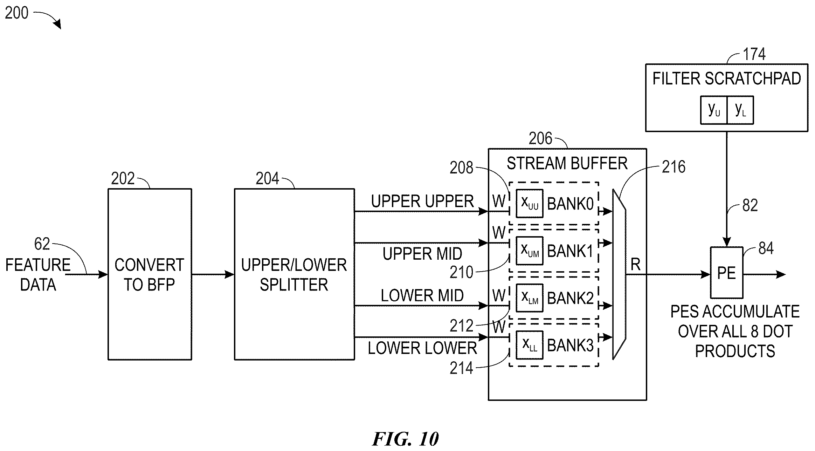

FIG. 10 is a visualization of a four-precision dynamically mixed precision machine learning architecture 200. The feature data 62 may be converted to block floating point with even greater precision than in the architecture 160 of FIG. 9 using a block floating point conversion component 202. For example, the block floating point conversion component 202 may convert incoming feature data 62 in a floating point format (e.g., FP32) into block floating point (BFP) values based on the native format of the integrated circuit device 12. For instance, the BFP conversion component 202 may generate sets of BFP data divisible into four INT8 or four INT9 block floating point values. An upper/lower splitter component 204 may split the resulting BFP values into four BFP components of different levels of significance (e.g., an upper upper component (X_{UU}), an upper middle component (X_{UU}), a lower middle component (X_{LM}), and a lower lower component (X_{LL})). These may be written to a stream buffer 206 in memory (e.g., the embedded memory blocks 36, the memory 54, or off-chip memory). The stream buffer 206 may include as many memory banks as there are split components; here, because there are four components, there are a first bank 208 (Bank0), a second bank 210 (Bank1), a third bank 212 (Bank2), and a fourth bank 214 (Bank3). Depending on the operation of the PE 84, the different banks 208, 210, 212, or 214 may be selectively read (e.g., as illustrated by a multiplexer 216) into the PE 84. By multiplying different components of the feature data 62 with different components of the filter data 82 stored in the filter scratchpad 174, higher-precisions layer computations may be obtained.

While the particular example of FIG. 10 illustrates splitting the feature data 62 into four BFP components, in other embodiments, the feature data 62 may be split in other ways to achieve different levels of precision. For example, the feature data 62 may be split into three BFP components, five BFP components, six BFP components, seven BFP components, eight BFP components, and so on. Moreover, while the filter scratchpad 174 is shown to hold filter data 82 that is split into two BFP components, the filter scratchpad 174 may hold filter data 82 that is not split (e.g., the filter data 82 may be a single, lower precision) or may hold filter data 82 that is split into more components. For example, the filter data 82 may be split into three BFP components, four BFP components, five BFP components, six BFP components, seven BFP components, eight BFP components, and so on.

FIG. 11 illustrates a conversion 220 of input feature data 62 from a floating point format (e.g., FP16) into a single lower-precision block floating point (BFP) format. An initial set of input data 228 in floating point format (e.g., FP16) may be received. The set of input data 228 may include independent values for a sign bit 222, an exponent 224, and a mantissa 226. The set of input data 228 may be reduced into reduced floating point numbers 230 so that the sign bit 222 and the mantissa 226 total to the number of bits corresponding to the native format of the PEs of the integrated circuit device 12. In the example of FIG. 11, the native format is INT9, so the mantissa 226 is reduced to the most significant 8 bits. The reduced floating point numbers 230 may be broken into a set of block floating point (BFP) values that use a shared exponent 224. The mantissae 226 of the reduced floating point numbers 230 may be shifted by an appropriate amount so that a single shared exponent 224 may be used for all of the BFP values.

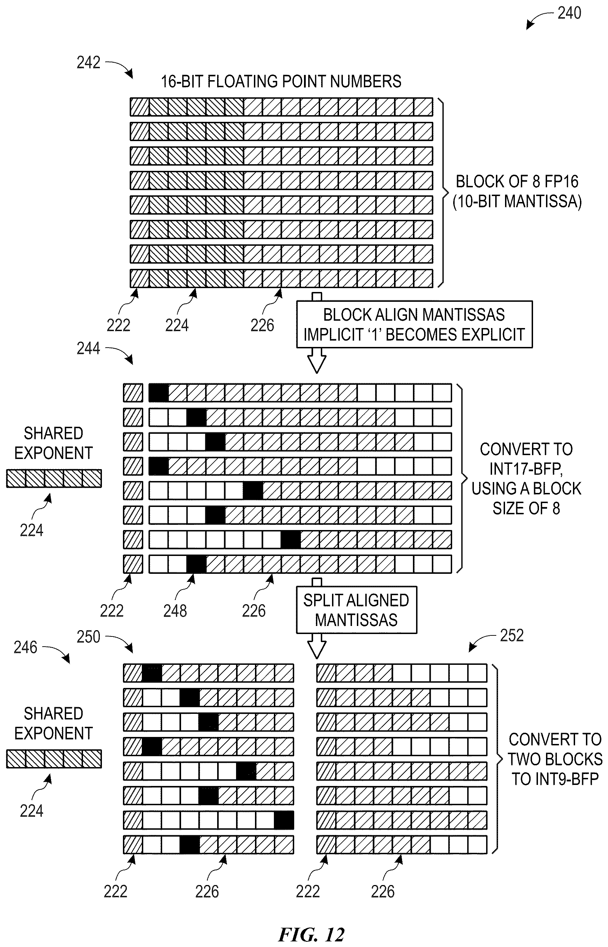

While the conversion of FIG. 11 may enable computations at a single precision, as mentioned above, it may be beneficial to be able to operate at different precisions for different machine learning layers. FIG. 12 illustrates a conversion into upper and lower components of block floating point (BFP) values (e.g., as shown in FIGS. 8 and 9). Similar conversions may be made for division into more components, such as discussed above with reference to FIG. 10. In FIG. 12, a conversion 240 that may take place in the block floating point conversion component 162 and the upper/lower splitter component 164 may initially involve receiving input feature data 62 in a floating point format (e.g., FP16). The set of input data 242 may include independent values for a sign bit 222, an exponent 224, and a mantissa 226. The set of input data 242 may be expanded and converted into a block of expanded BFP values 244 before being split 246.

The expanded BFP values 244 have a higher-precision BFP format. Here, the sign bit 222 and the mantissa 226 total to the number of bits corresponding to the native format of the PEs 84 of the integrated circuit device 12 minus one. In the example of FIG. 12, the native format is INT9, so the mantissas 226 are extended to a total of 16 bits to preserve precision when the mantissas are block-aligned. In total, with the sign bit 222, the expanded BFP values 244 have 17 bits, so take the form of a block of INT17 values with a shared exponent 224. When performing the block alignment to use a single shared exponent 224 for a block of values, an implicit "1" used in the floating point format values of the input data 242 becomes an explicit "1" 248. The bits prior to the explicit "1" 248 in the BFP values 244 are "0."

The expanded BFP values 244 may be split into upper components 250 and lower components 252. This involves an additional sign bit 222. That is, each component 250 and 252 includes a respective sign bit 222. Thus, when the native precision of the integrated circuit device 12 is INT9, there may be one sign bit 222 and eight mantissa 226 bits for each component 250 and 252. The shared exponent 224 for the lower component 252 may be derived from the shared exponent 224 of the upper component 250 (e.g., subtracting eight) to account for the bit shift between mantissas 226 between the upper component 250 and the lower component 252.

Note that the same conversion process may be applied to filter data 82, but since filter data 82 are known at compile time, this processing happens before runtime using the design software 18 or the compiler 20. The ready-converted and split filter data 82 may be stored directly into the filter cache of the filter scratchpad 174. A high precision group of filter data 82 may consume twice the space compared to a normal precision group of filter data 82 (e.g., which may correspond only to the upper portion (e.g., Y_{U})).

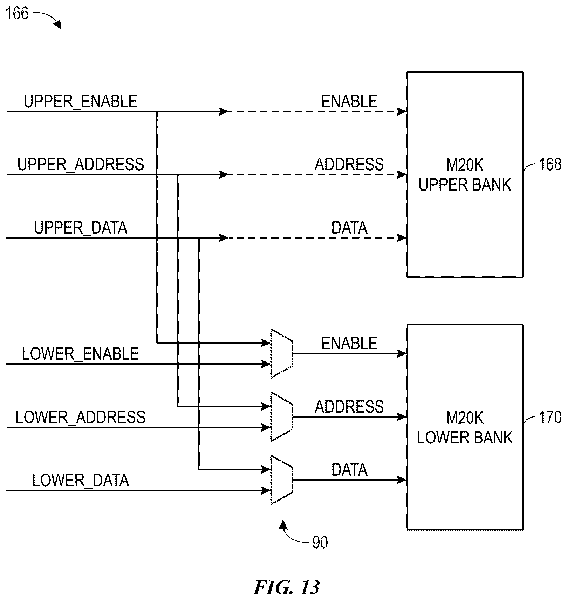

FIG. 13 illustrates a manner of using the multiple banks 168 and 170 of the stream buffer 166 for different precisions for different layers. After converting floating point (e.g., FP16) feature data 62 into upper and lower block floating point (BFP) data (e.g., X_{U} and X_{L}), this data may be stored in the stream buffer 166. To enhance efficiency, the stream buffer 166 may be designed so that when dynamically mixed precision is enabled, the stream buffer 166 memory is split into two banks 168 and 170. Banking the stream buffer 166 allows for simultaneous writing of upper and lower data parts in one clock cycle. This banking is concealed from the rest of the circuitry, meaning that if the circuitry is configured for normal precision, it will treat the two banks 168 and 170 as a single memory unit; hence, the upper component (normal precision signals in this case) will have access to both banks 168 and 170. Indeed, as shown in FIG. 13, an upper enable line for an Upper_Enable signal, an upper address line for an Upper_Address signal, and an upper data line for an Upper_Data signal may go only to the upper bank 168 during higher-precision operation. This is because a series of multiplexers 90 may be controlled to select a lower enable line for a Lower_Enable signal, a lower address line for a Lower_Address signal, and a lower data line for a Lower_Data signal to go to the lower bank 170 when operating in a higher-precision mode.

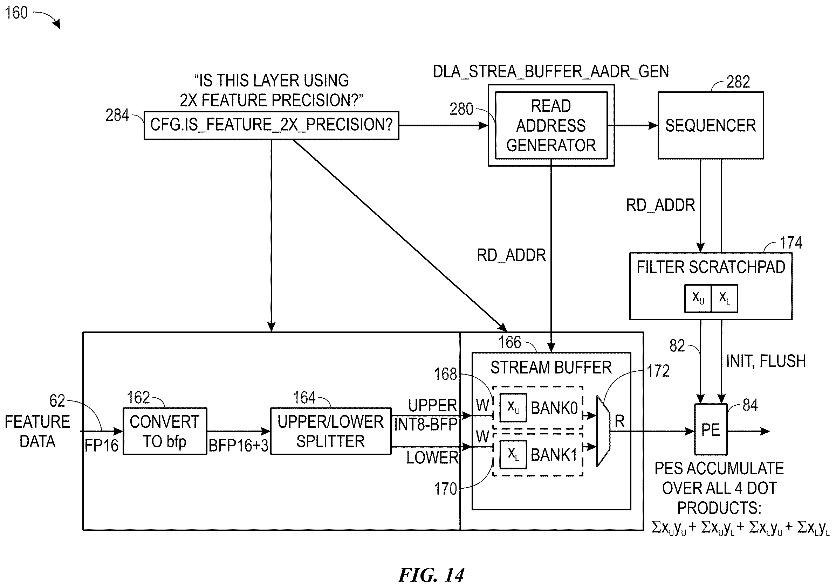

FIG. 14 provides an example of one mechanism to do this. In FIG. 14, the two-precision dynamically mixed precision machine learning architecture 160 is shown to include a read address generator 280, a sequencer 282, and a precision register 284. The read address generator 280 and the sequencer 282 may be formed using any suitable circuitry. For example, the read address generator 280 and the sequencer 282 may represent finite state machines. Additionally or alternatively, the read address generator 280 or the sequencer 282 may be implemented as instructions executed by a hardened processor or a soft logic processor. The read address generator 280 may generate the stream buffer 166 memory addresses to the read from the banks 168 and/or 170 to obtain an upper or lower BFP component of the feature data 62. For example, the read address generator 280 may generate a read address that alternates between the first bank 168 and the second bank 170 based on an increment by one of a least significant bit of the read address. The read address generator 280 may also generate the filter scratchpad 174 memory addresses to read out the filter data 82 from the filter scratchpad 174. The sequencer 282 may control the readout of the filter scratchpad 174 into the PE 84 and the operation of the PE 84 (e.g., initializing and/or flushing the PE 84).

The operation of the conversion circuitry 162, upper/lower splitter circuitry 164, stream buffer 166, and/or the read address generator 280 and the sequencer 282 may be influenced by the precision register 284. Based on a state of the precision register 284, which may be changed from machine learning layer to machine learning layer (e.g., the design software 18 or the compiler 20 may generate a sequence of states to program into the precision register 284 based on the precision to be used for each machine learning layer), these circuit components may operate to act in a higher precision or a lower precision. For example, the upper/lower splitter 164 may only write to the upper bank 168 of the stream buffer 166 when the precision register 284 is set to normal precision, but may write the upper component to the upper bank 168 and the lower component to the lower bank 170 when the precision register 284 is set to a higher precision. In another example, the state of the precision register 284 may control the select signal applied to the multiplexers 90 of the stream buffer 166 (e.g., which control the upper and lower enable, address, and data lines to access the lower bank 170) as shown in FIG. 13. When the precision register 284 is set to normal precision, the lower enable line for the Lower_Enable signal, the lower address line for the Lower_Address signal, and the lower data line for the Lower_Data signal may be disconnected from the lower bank 170, but these signal lines may be connected when the precision register 284 is set to a higher precision.

Likewise, the read address generator 280 and the sequencer 282 may control the stream buffer 166, filter scratchpad 174, and PE 84 to perform additional operations based on the precision register 284. For example, when the precision register 284 is set to normal precision, the stream buffer 166 may only read out the upper bank 168 and the filter scratchpad 174 may only read out the upper filter data into the PE 84, and the PE 84 may perform a single dot product operation. When the precision register 284 is set to higher precision, the stream buffer 166 may read out the upper bank 168 and the lower bank 170 at different times and the filter scratchpad 174 may read out the upper filter data and the lower filter data at different times into the PE 84, and the PE 84 may perform four dot products that are accumulated (e.g., as illustrated by the expression shown on FIG. 14).

Note that, in some embodiments, the precision register 284 may indicate more than just two states of precision. For example, the precision register 284 may indicate that the filter data, but not the feature data, is to be higher precision (e.g., upper and lower components of filter data may be multiplied against the upper component from the streaming bank 168). In another example, the precision register 284 may indicate that the feature data is to be higher precision but not the filter data (e.g., upper and lower components of feature data from the banks 168 and 170 may be multiplied against the upper component of the filter data). When there are other levels of precision for the feature data or the filter data (e.g., as illustrated in FIG. 10), the precision register 284 may indicate the particular precision level for using the various stream buffer 206 banks 208, 210, 212, or 214.

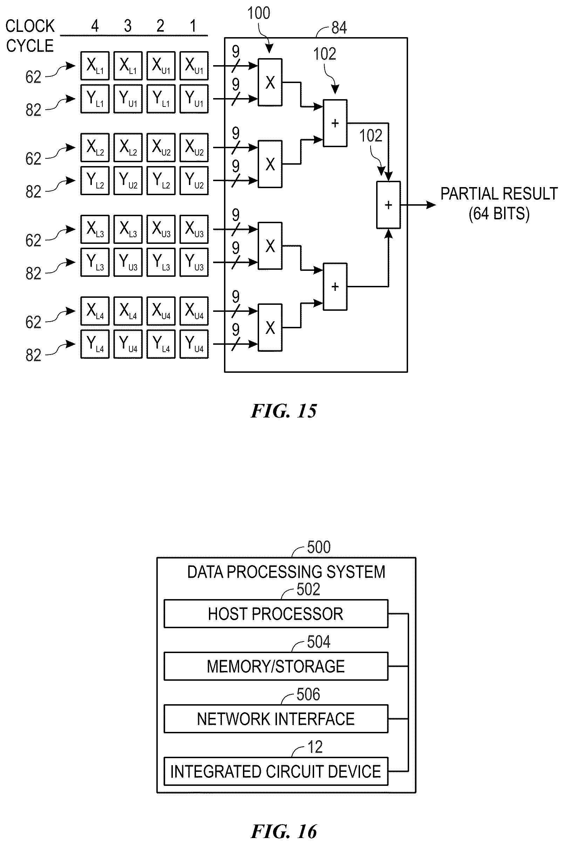

Once feature data 62 and filter data 82 are stored in their respective memories, as shown in FIG. 15, they are fed into the PE 84 array to perform multiply-accumulate operations using the multipliers 100 and addition circuitry 102 of the PEs 84. The PE 84 array includes multiple PEs (e.g., which may include a chain of DSP blocks 34 and accumulation circuitry that may be included in the DSP blocks 34 or formed using programmable logic blocks 32). By way of example, for Agilex^{®} 7 FPGAs by Altera Corporation, the DSP block 34 may be configured dynamically to execute either high precision or normal precision computations in the manner shown in FIG. 15.

The mechanism for supporting high precision multiplication involves performing multiplications via time-multiplexing and summing all partial products, as illustrated in FIG. 15. In high precision computations, for each feature-filter dot product, the PE 84 is configured to execute four multiplications and accumulate all partial results over time into a single output corresponding to four results of Expression 1. Similar time multiplexing may be used for the tensor circuitry of the PE 84B shown in FIG. 6.

The integrated circuit device 12 discussed above may be a component included in a data processing system, such as a data processing system 500, shown in FIG. 16. The data processing system 500 may include the integrated circuit device 12 (e.g., a programmable logic device, an application specific integrated circuit (ASIC)), a host processor 502, memory and/or storage circuitry 504, and a network interface 506. The data processing system 500 may include more or fewer components (e.g., electronic display, user interface structures, application specific integrated circuits (ASICs)). Moreover, any of the circuit components depicted in FIG. 7 may include the NOC 46 of the integrated circuit device 12. The host processor 502 may include any of the foregoing processors that may manage a data processing request for the data processing system 500 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 504 may include random access memory (RAM), read-only memory (ROM), one or more hard drives, flash memory, or the like. The memory and/or storage circuitry 504 may hold data to be processed by the data processing system 500. In some cases, the memory and/or storage circuitry 504 may also store configuration programs (e.g., bitstreams) for programming the integrated circuit device 12. The network interface 506 may allow the data processing system 500 to communicate with other electronic devices. The data processing system 500 may include several different packages or may be contained within a single package on a single package substrate. For example, components of the data processing system 500 may be located on several different packages at one location (e.g., a data center) or multiple locations. For instance, components of the data processing system 500 may be located in separate geographic locations or areas, such as cities, states, or countries.

The data processing system 500 may be part of a data center that processes a variety of different requests. For instance, the data processing system 500 may receive a data processing request via the network interface 506 to perform encryption, decryption, machine learning, video processing, voice recognition, image recognition, data compression, database search ranking, bioinformatics, network security pattern identification, spatial navigation, digital signal processing, or other specialized tasks.

The techniques and methods described herein may be applied with other types of integrated circuit systems. To provide only a few examples, these may be used with central processing units (CPUs), graphics cards, hard drives, or other components.

While the embodiments set forth in the present disclosure may be susceptible to various modifications and alternative forms, specific embodiments have been shown by way of example in the drawings and have been described in detail herein. However, the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### Example Embodiments

EXAMPLE EMBODIMENT 1. An integrated circuit device comprising:
conversion circuitry to convert input feature data to block floating point format;
upper/lower splitter circuitry to split the input feature data in the block floating point format into an upper component in the block floating point format and a lower component in the block floating point format; and
a processing element to use only the upper component when operating in a lower-precision mode and use both the upper component and the lower component when operating in a higher-precision mode.

EXAMPLE EMBODIMENT 2. The integrated circuit device of example embodiment 1, comprising a stream buffer comprising:
a first bank to store the upper component; and
a second bank to store the lower component.

EXAMPLE EMBODIMENT 3. The integrated circuit device of example embodiment 2, wherein the first bank comprises a first address and the second bank comprises a second address, wherein:
a least significant bit of the first address is even and a least significant bit of the second address is odd; or
the least significant bit of the first address is odd and the least significant bit of the second address is even.

EXAMPLE EMBODIMENT 4. The integrated circuit device of example embodiment 2 or 3, comprising a read address generator to generate a read address that alternates between the first bank and the second bank based on an increment by one of a least significant bit of the read address.

EXAMPLE EMBODIMENT 5. The integrated circuit device of one of the example embodiments 2 to 4, wherein the stream buffer comprises on-chip memory on the integrated circuit device.

EXAMPLE EMBODIMENT 6. The integrated circuit device of one of the example embodiments 2 to 5, wherein the on-chip memory comprises embedded memory in programmable logic circuitry of the integrated circuit device.

EXAMPLE EMBODIMENT 7. The integrated circuit device of one of the example embodiments 1 to 6, wherein the processing element comprises tensor circuitry configurable to perform a first plurality of dot product and accumulate operations in parallel with a second plurality of dot product and accumulate operations.

EXAMPLE EMBODIMENT 8. The integrated circuit device of one of the example embodiments 1 to 6, wherein the conversion circuitry and the upper/lower splitter circuitry are implemented using soft logic circuitry comprising programmable logic blocks and the processing element is implemented using hardened circuitry comprising hardened arithmetic circuitry.

EXAMPLE EMBODIMENT 9. The integrated circuit device of one of the example embodiments 1 to 8, comprising a register to indicate operation in the lower-precision mode or the higher-precision mode.

EXAMPLE EMBODIMENT 10. The integrated circuit device of example embodiment 9, wherein the integrated circuit device is to implement a machine learning graph comprising multiple layers, wherein the register is variable from layer to layer to adjust operating in the lower-precision mode or the higher-precision mode in different layers.

EXAMPLE EMBODIMENT 11. One or more tangible, non-transitory, machine-readable media comprising instructions that, when executed by a data processing system, enable the data processing system to perform operations to generate a system design for an integrated circuit device comprising:
conversion circuitry to convert input feature data to block floating point format;
upper/lower splitter circuitry to split the input feature data in the block floating point format into an upper component and a lower component;
a processing element to use only the upper component of the feature data when operating in a lower-precision mode and use both the upper component of the feature data and the lower component of the feature data when operating in a higher-precision mode.

EXAMPLE EMBODIMENT 12. The one or more tangible, non-transitory, machine-readable media of example embodiment 11, wherein the instructions, when executed by the data processing system, enable the data processing system to perform operations to generate the system design for the integrated circuit device, wherein the system design comprises:
a stream buffer to store the upper component of the feature data and the lower component of the feature data in on-chip memory of the integrated circuit device.

EXAMPLE EMBODIMENT 13. The one or more tangible, non-transitory, machine-readable media of example embodiment 11 or 12, wherein the instructions, when executed by the data processing system, enable the data processing system to perform operations to generate the system design for the integrated circuit device, wherein the system design comprises the stream buffer, wherein the stream buffer comprises:
a first bank to store the upper component of the feature data; and
a second bank to store the lower component of the feature data.

EXAMPLE EMBODIMENT 14. The one or more tangible, non-transitory, machine-readable media of example embodiment 12 or 13, wherein the instructions, when executed by the data processing system, enable the data processing system to perform operations to generate the system design for the integrated circuit device, wherein the system design comprises the stream buffer, wherein the stream buffer comprises logic circuitry to disable access to the second bank to writing of the lower component of the feature data when operating in the lower-precision mode.

EXAMPLE EMBODIMENT 15. The one or more tangible, non-transitory, machine-readable media of one of the example embodiments 12 to 14, wherein the instructions, when executed by the data processing system, enable the data processing system to perform operations to generate the system design for the integrated circuit device, wherein the system design comprises:
a filter scratchpad to store an upper component of filter data and a lower component of the filter data;
wherein the processing element is to use only the upper component of the filter data when operating in the lower-precision mode and use both the upper component of the filter data and the lower component of the filter data when operating in the higher-precision mode.

EXAMPLE EMBODIMENT 16. The one or more tangible, non-transitory, machine-readable media of one of the example embodiments 11 to 14, wherein the instructions, when executed by the data processing system, enable the data processing system to perform operations to generate the system design for the integrated circuit device, wherein the system design comprises:
a register to indicate a present precision mode as being the higher-precision mode or the lower-precision mode.

EXAMPLE EMBODIMENT 17. The one or more tangible, non-transitory, machine-readable media of one of the example embodiments 11 to 16, wherein the instructions, when executed by the data processing system, enable the data processing system to perform operations to generate the system design for the integrated circuit device, wherein the system design comprises:
a register to indicate a present precision mode as being the higher-precision mode or the lower-precision mode.

EXAMPLE EMBODIMENT 18. The one or more tangible, non-transitory, machine-readable media of one of the example embodiments 11 to 17, wherein the system design is a programmable logic device system design.

EXAMPLE EMBODIMENT 19. A method comprising:
beginning processing relating to a first machine learning layer on an integrated circuit device;
based on a precision mode for the first machine learning layer being a lower-precision mode, using a lower-precision conversion of input feature data in a computation for the first machine learning layer; and
based on a precision mode for the first machine learning layer being a higher-precision mode, using a higher-precision conversion of the input feature data split into an upper component and a lower component in the computation for the first machine learning layer.

EXAMPLE EMBODIMENT 20. The method of example embodiment 19, wherein the higher-precision conversion of the input feature data comprises a conversion of floating point values into block floating point values larger than a native precision of hardened arithmetic circuitry of the integrated circuit device.

## Claims

1. An integrated circuit device comprising:
conversion circuitry to convert input feature data to block floating point format;
upper/lower splitter circuitry to split the input feature data in the block floating point format into an upper component in the block floating point format and a lower component in the block floating point format; and
a processing element to use only the upper component when operating in a lower-precision mode and use both the upper component and the lower component when operating in a higher-precision mode.

2. The integrated circuit device of claim 1, comprising a stream buffer comprising:
a first bank to store the upper component; and
a second bank to store the lower component.

3. The integrated circuit device of claim 2, wherein the first bank comprises a first address and the second bank comprises a second address, wherein:
a least significant bit of the first address is even and a least significant bit of the second address is odd; or
the least significant bit of the first address is odd and the least significant bit of the second address is even.

4. The integrated circuit device of claim 2 or 3, comprising a read address generator to generate a read address that alternates between the first bank and the second bank based on an increment by one of a least significant bit of the read address.

5. The integrated circuit device of one of claims 2 to 4, wherein the stream buffer comprises on-chip memory on the integrated circuit device.

6. The integrated circuit device of one of claims 2 to 5, wherein the on-chip memory comprises embedded memory in programmable logic circuitry of the integrated circuit device.

7. The integrated circuit device of one of claims 1 to 6, wherein the processing element comprises tensor circuitry configurable to perform a first plurality of dot product and accumulate operations in parallel with a second plurality of dot product and accumulate operations.

8. The integrated circuit device of one of claims 1 to 7, wherein the conversion circuitry and the upper/lower splitter circuitry are implemented using soft logic circuitry comprising programmable logic blocks and the processing element is implemented using hardened circuitry comprising hardened arithmetic circuitry.

9. The integrated circuit device of one of claims 1 to 8, comprising a register to indicate operation in the lower-precision mode or the higher-precision mode, and
wherein the integrated circuit device is to preferably implement a machine learning graph comprising multiple layers, wherein the register is variable from layer to layer to adjust operating in the lower-precision mode or the higher-precision mode in different layers.

10. One or more tangible, non-transitory, machine-readable media comprising instructions that, when executed by a data processing system, enable the data processing system to perform operations to generate a system design for an integrated circuit device comprising:
conversion circuitry to convert input feature data to block floating point format;
upper/lower splitter circuitry to split the input feature data in the block floating point format into an upper component and a lower component;
a processing element to use only the upper component of the feature data when operating in a lower-precision mode and use both the upper component of the feature data and the lower component of the feature data when operating in a higher-precision mode.

11. The one or more tangible, non-transitory, machine-readable media of claim 10, wherein the instructions, when executed by the data processing system, enable the data processing system to perform operations to generate the system design for the integrated circuit device, wherein the system design comprises:
a stream buffer to store the upper component of the feature data and the lower component of the feature data in on-chip memory of the integrated circuit device, and
wherein the instructions, when executed by the data processing system, preferably enable the data processing system to perform operations to generate the system design for the integrated circuit device, wherein the system design comprises the stream buffer, wherein the stream buffer comprises:
a first bank to store the upper component of the feature data; and
a second bank to store the lower component of the feature data.

12. The one or more tangible, non-transitory, machine-readable media of claim 11, wherein the instructions, when executed by the data processing system, enable the data processing system to perform operations to generate the system design for the integrated circuit device, wherein the system design comprises the stream buffer, wherein the stream buffer comprises logic circuitry to disable access to the second bank to writing of the lower component of the feature data when operating in the lower-precision mode, and/or
wherein the instructions, when executed by the data processing system, enable the data processing system to perform operations to generate the system design for the integrated circuit device, wherein the system design comprises:
a filter scratchpad to store the upper component of filter data and a lower component of the filter data;
wherein the processing element is to use only the upper component of the filter data when operating in the lower-precision mode and use both the upper component of the filter data and the lower component of the filter data when operating in the higher-precision mode.

13. The one or more tangible, non-transitory, machine-readable media of one of claims 10 to 12, wherein the instructions, when executed by the data processing system, enable the data processing system to perform operations to generate the system design for the integrated circuit device, wherein the system design comprises:
a register to indicate a present precision mode as being the higher-precision mode or the lower-precision mode, and/or

14. The one or more tangible, non-transitory, machine-readable media of one of claims 10 to 13, wherein the instructions, when executed by the data processing system, enable the data processing system to perform operations to generate the system design for the integrated circuit device, wherein the system design comprises:
a register to indicate a present precision mode as being the higher-precision mode or the lower-precision mode.

15. A method comprising:
beginning processing relating to a first machine learning layer on an integrated circuit device;
based on a precision mode for the first machine learning layer being a lower-precision mode, using a lower-precision conversion of input feature data in a computation for the first machine learning layer; and
based on a precision mode for the first machine learning layer being a higher-precision mode, using a higher-precision conversion of the input feature data split into an upper component and a lower component in the computation for the first machine learning layer.
